Europäisches Patentamt

European Patent Office

Office européen des brevets

(11) Veröffentlichungsnummer: **0 305 327**
**A1**

## (12) EUROPÄISCHE PATENTANMELDUNG

(21) Anmeldenummer: **88810550.9**

(51) Int. Cl.⁴: **G 03 B 27/72**

(22) Anmeldetag: **12.08.88**

(30) Priorität: **21.08.87 CH 3214/87**

(43) Veröffentlichungstag der Anmeldung:
**01.03.89 Patentblatt 89/09**

(84) Benannte Vertragsstaaten:
**BE CH DE FR GB IT LI NL**

(71) Anmelder: **CIBA-GEIGY AG**
**Klybeckstrasse 141**
**CH-4002 Basel (CH)**

(72) Erfinder: **Meyer, Armin, Dr.**
**route de Lossy 343**
**CH-1782 Belfaux (CH)**

(54) **Verfahren und Vorrichtung zur Herstellung von photographischen Bildern von transparenten Vorlagen.**

(57) Beim Verfahren zur Herstellung von photographischen Bildern von transparenten Vorlagen wird die Vorlage (1) in einem ersten Strahlengang mittels einer Lichtquelle (2) und einer Optik (3, 4, 5) auf photographisches Material (6) und in einem zweiten Strahlengang zwecks Farb- und Kontrastkorrektur mittels einer von einer Bildmesseinrichtung (15) und Recheneinheit (18, 19, 20) gesteuerten Kathodenstrahlröhre (10) als Maske deckungsgleich auf das photographische Material abgebildet. Dabei wird die Maske durch eine aus der Kathodenstrahlröhre-Vorlage-Bildaufnahmeeinrichtung-Recheneinheit und wieder Kathodenstrahlröhre gebildeten Rückkoppelungsschleife erzeugt, wodurch insbesondere die geometrischen Bildverzerrungen der Kathodenstrahlröhre eliminiert werden. An jeder Stelle auf dem Bildschirm der Kathodenstrahlröhre, an der sich der Lichtpunkt befindet, wird die Helligkeit des Bildpunktes berechnet und sofort korrigiert.

Durch obige Massnahmen wird der Einfluss der stets vorhandenen Verzerrungen der Kathodenstrahlröhre ausgeschaltet, womit ein schärferes Bild erzielt wird. Der für die Belichtung verwendete Teil des Lichtes der Kathodenstrahlröhre wird durch die Vorlage nicht geschwächt. Ein solches Verfahren ist vor allem für das Kopieren von Farb-Diapositiven gedacht.

EP 0 305 327 A1

## Beschreibung

### Verfahren und Vorrichtung zur Herstellung von photographischen Bildern von transparenten Vorlagen

Die vorliegende Erfindung bezieht sich auf ein Verfahren zur Herstellung von photographischen Bildern von transparenten Vorlagen, worin die Vorlage in einem ersten Strahlengang mittels einer Lichtquelle und einer Optik auf photographisches Material und in einem zweiten Strahlengang zwecks Farb- und Kontrastkorrektur mittels einer von einer Bildmesseinrichtung und Recheneinheit gesteuerten Kathodenstrahlröhre als Maske deckungsgleich auf das photographische Material abgebildet wird, sowie auf eine Vorrichtung zu dessen Ausführung. Dabei wird insbesondere einerseits an Diapositive und andererseits an farbphotographische Bilder gedacht.

Ein solches Verfahren bzw. Vorrichtung ist aus der US-A-3 934 081 bekannt, wobei es sich um ein Verfahren mit Kombinationsbelichtung handelt, bei welchem eine scharfe optische Belichtung eines herkömmlichen Vergrösserungsgerätes mit einer weniger scharfen Korrekturbelichtung von einer lichtstarken Kathodenstrahlröhre kombiniert wird, d.h. man wendet das Verfahren der sogenannten unscharfen Maskierung an. Dabei müssen die Teilbelichtungen in ihrer Stärke so aufeinander abgestimmt sein, dass ein korrekt exponiertes Bild resultiert. Das in dieser Patentschrift und in der US-A-4 580 167 angegebene Verfahren geht vom Aufbau eines konventionellen Vergrösserungsgerätes aus. Dabei wird die Vorlage von einer geeigneten Lichtquelle, z.B. einer Halogenlampe, in der üblichen Anordnung durchstrahlt und über ein Hauptobjektiv auf das Photomaterial abgebildet. In einem zweiten Strahlengang, der mittels teilreflektierenden Spiegeln aus dem ersten Strahlengang abgelenkt wird, trifft der Teilstrahl auf eine Fernseh- oder Videokamera. Die erhaltenen Signale für die Transmission in Blau, Grün und Rot von jedem Bildpunkt der Vorlage werden in einem Bildcomputer korrigiert und steuern die Kathoden strahlröhre, deren Strahlablenkung mit der Fernsehkamera synchronisiert ist. Das auf dem Schirm der Kathodenstrahlröhre erzeugte Maskenbild wird über ein Objektiv und über einen zweiten Ablenkspiegel dem optisch auf dem Photomaterial belichteten Bild überlagert, wobei sich die unscharfe Maskierung ergibt.

Um ein gutes Bild zu erhalten ist es notwendig, dass die beiden Teilbilder, d.h. das optisch-konventionelle und das elektronisch erzeugte Bild, sich über die ganze Bildfläche sehr gut decken, sonst ergeben sich farbige Konturen an Bildstellen, bei denen Felder mit verschiedener Farbe aneinandergrenzen. Die von den üblichen, auch in den beiden obengenannten Patentschriften erwähnten Kothodenstrahlröhren produzierten Bilder weisen jedoch Verzerrungen der Bildgeometrie auf, die bei Kombination mit einem optisch erzeugten Bild zu den erwähnten Deckungsfehlern führen. Die elektronische Korrektur dieser Fehler der Bildgeometrie ist sehr aufwendig.

Es ist demgegenüber Aufgabe der vorliegenden Erfindung, ein Verfahren und eine Vorrichtung zu dessen Ausführung anzugeben, die es ermöglichen, mit einfachen Mitteln den Einfluss der Bildverzerrung der Kathodenstrahlröhre auf die Qualität des zu erzeugenden Bildes zu vernachlässigen, sowie eine Schwächung des zur Belichtung verwendeten Lichtes der Kathodenstrahlröhre zu vermeiden. Das diese Aufgabe lösende erfindungsgemässe Verfahren und die entsprechende erfindungsgemässe Vorrichtung sind in den unabhängigen Ansprüchen beschrieben. Bevorzugte Ausgestaltungen ergeben sich aus den abhängigen Ansprüchen. Gemäss der Ausführungsform nach den Ansprüchen 5-8 wird vorteilhaft zusätzlich erreicht, dass der Randabfall eines von einer Kathodenstrahlröhre über ein Objektiv auf ein Photomaterial belichtetes Bild verringert wird.

In 2244 Research Disclosure no. 174 (1978.10) ist ein mit Kathodenstrahlröhren (CRT) arbeitendes Farbvergrösserungsgerät beschrieben. In diesem Gerät lenkt ein teilreflektierender Spiegel einen Teil des Lichtes des Vergrösserungsapparates vor dem Objektiv in einen Seitenzweig. Teildurchlässige oder dichroitische Spiegel und Farbfilter teilen dieses Licht in B, G und R auf, das je über ein Objektiv auf Vidicon-Aufnahmeröhren gelenkt wird, wo eine verkleinerte Abbildung der Vorlage er scheint. Eine Rechner-Einheit rechnet die Vidicon-Ausgangssignale um und steuert die Helligkeit jedes Bildpunktes auf einer CRT. Das Licht der CRT wird nach Passage eines Objektives über einen teilreflektierenden Spiegel dem Licht des Vergrösserungsapparates überlagert.

Vidiconröhren und CRT weisen nicht-lineare geometrische Bildverzerrungen auf. Die Korrektur derselben ist sehr schwierig und aufwendig. Somit ist mit Deckungsfehlern der Teilbider zu rechnen. Diese werden gemäss der vorliegenden Erfindung durch folgende Massnahmen vermieden: Es wird nur eine einzige CRT-Röhre verwendet, deren Licht durch einen teildurchlässigen Spiegel in einen Belichtungs- und einen Abtastungszweig aufgespalten wird. Im Abtastungszweig durchsetzt das Licht zuerst ein Objektiv, das das Bild der CRT, bzw. den in jedem Moment auf der CRT geschriebenen Bildpunkt, auf die Vorlage (Diapositiv) abbildet. Nach dem Diapositiv wird dieses Licht in geeigneter Weise (Streuscheibe, Faseroptikbündel, gekreuzte Linsenrasterelemente, dichroitische Strahlenteiler oder prismatische Lichtleitkörper) auf drei Farbfilter (B, G, R) gelenkt, hinter denen sich Photodedektoren befinden. Deren Signale werden nach Umrechung und Verstärkung im Sinne einer Rückkopplungsschleife dem Steuergitter CTR zugeführt. Diese Umrechung, die eine Helligkeitskorrektur für jeden Bildpunkt bewirkt, ist schnell im Vergleich zur Bildabtastung. Die Korrektur erfolgt also, bevor der nächste Bildpunkt abgetastet wird. Deshalb wird die Bildgeometrie einzig durch das Diapositiv bestimmt. Eine geometrische Verzerrung des CRT-Rasters hat keinen Einfluss.

Zum Stand der Technik ist weiter US-PS 3 459 888 bekannt. Sie bezieht sich auf Mikrofilm-Aufnahmen von schwarz/weiss Dokumenten. Die Dokument-Belichtung erfolgt mit Blitzlampen. Vorgängig wird jedoch mit Glühlampen belichtet, wobei das Bild durch eine Vidicon-Kamera aufgenommen wird; es erscheint auf einem Monitor. Der Operateur kann einen rechteckigen Teil des Bildes auswählen, der nicht kopiert werden soll. Dieser Teil des Bildes wird mit einer CRT überbelichtet (voll geschwärzt bei negativ-positiv Film).

Weiters ist aus US-PS 3 984 187 ($\hat{=}$ DE-OS 24 08 019) ein Verfahren zur Abtastung und Aufzeichnung von bildmässigen Vorlagen bekannt, welches ebenfalls mit einer Kathodenstrahlröhre (CRT) arbeitet. Im Gegensatz zur vorliegenden Erfindung geht es dabei aber nur um eine Konstrastkorrektur, nicht eine Farbkorrektur.

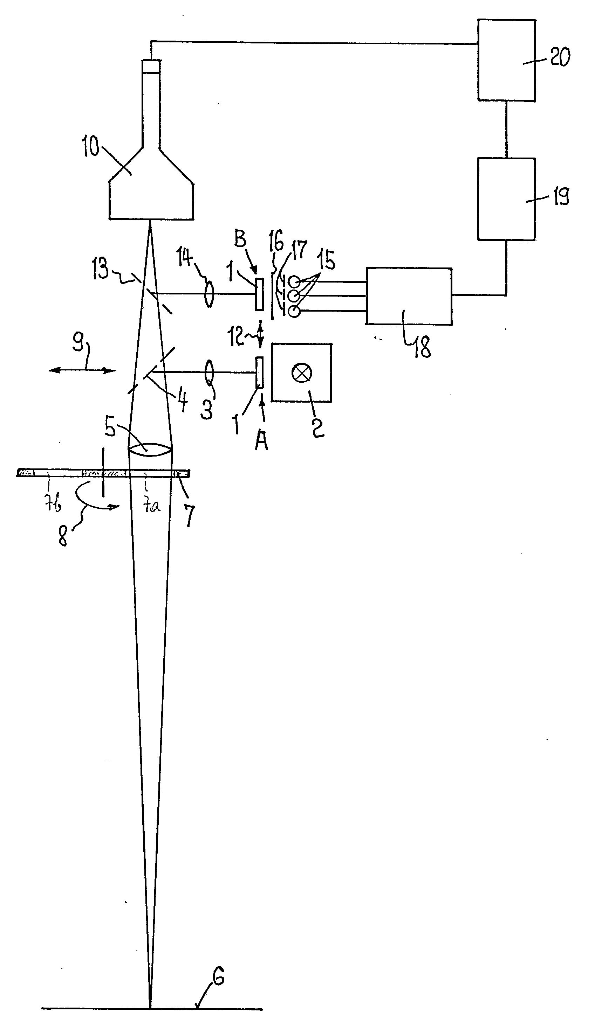

Bei den Ausführungsformen nach den Figuren 1, 3 und 4 erfolgt sowohl die Hauptbelichtung als auch die Korrekturbelichtung ausschliesslich mit einer Kathodenstrahlröhre; es wird eine Kontrasterniedrigung angestrebt.

Gemäss der Ausführungsform nach Fig. 2 dient für die Hauptbelichtung eine Glühlampe. Somit durchstrahlt das Licht der CRT, mindestens für die Korrekturbelichtung, in jedem Falle die transparente Vorlage. Unsere Rechnungen und Versuche zeigen aber, dass dabei ein sehr beträchtlicher Teil des ohnehin relativ knappen Lichtangebots der CRT verloren geht. Für viele photographische Materialien wäre dies unzulässig, da die Belichtungszeiten auf etliche Minuten ansteigen würden (Forderung: Gesamtbelichtung unter 30 sec., nach erfindungsgemässem System erreichbar, durch Versuche gestützt). Dies ist gemäss der Erfindung möglich, da die Vorlage im Messzweig durchstrahlt wird. Die Verwendung von extrem lichtstarken CRT's, z.B. Projektionsröhren, wäre kaum eine gute Alternative (Lebensdauer, Preis, Kühlung, Spotgrösse). Solche Röhren sind in der US-PS 3 984 187 auch nicht erwähnt. Wenn man bedenkt, dass ein Farbdiapositiv Maximaldichten von 2,7 oder mehr aufweisen kann und bei der Durchstrahlung einer Dichte von 2 ca. 99 % und bei Dichte 3 sogar 99,9 % des Lichts absorbiert wird, so wird die Lichtschwäche der Vorrichtung nach der US-PS 3 984 187 erst richtig als erheblicher Mangel deutlich bzw. bewusst.

In US-PS Nos. 4 394 089 und 3 961 366 sind ähnliche Vorrichtungen mit ähnlichen Mängeln wie in den eingangs diskutierten US-PS Nos. 3 934 081 und 4 580 167 beschrieben. In diesen sowie in weiteren Druckschriften, z.B. US-PS 4 344 699, US-PS 3 115 807 und CH-PS 453 878, sind Anordnungen beschrieben, bei denen das Licht der CRT die Vorlage durchsetzt, bevor es auf das Photomaterial gelangt. Die Vorlage absorbiert jedoch so viel Licht, dass sich entweder lange Belichtungszeiten ergeben oder hochempfindliche Photomaterialien verwendet werden müssen. In dem US-Patent 4 394 089, in dem ein niedrig empfindliches Photomaterial erwähnt ist, werden deshalb für die Kontaktkopie drei Projektions-CRT's mit besonders hoher Lichtstärke vorgeschlagen, je eine für Blau, Grün und Rot.

Im folgenden wird die Erfindung anhand der Zeichnung näher erläutert. Die einzige Figur zeigt schematisch ein Ausführungsbeispiel einer erfindungsgemässen Vorrichtung.

Für die konventionelle licht-optische Belichtung erkennt man eine transparente Vorlage 1, beispielsweise ein Diapositiv, die von einer Beleuchtungseinheit 2 durchstrahlt wird, die z.B. eine Halogenlampe und Kopierfilter oder dichroitische Spiegel aufweist, wie sie bei Farbvergrösserungsgeräten verwendet werden. Mit den regelbaren Kopierfiltern kann in üblicher Weise die Graubalance eingestellt werden, so dass auf der Vorlage vorhandene Graufelder neutralgrau wiedergegeben werden. Die Einheit 2 kann zusätzlich einen Verschluss enthalten, um die Belichtungszeit zu steuern. Man kann auch die Lampe ein- und ausschalten. Die Vorlage 1 wird über ein Hilfsobjektiv 3, einen beweglichen Spiegel 4 und ein Hauptobjektiv 5 auf ein Farbphotomaterial 6 abgebildet. Dabei durchsetzt das Licht ein Filterrad 7, das gemäss Pfeil 8 drehbar ist. Das Filterrad 7 weist vier Oeffnungen auf, drei davon enthalten die Belichtungsfilter blau, grün oder rot, während die vierte Oeffnung für die optische Belichtung ohne Filter geformt ist. In der Figur sind nur zwei Filter 7a und 7b der drei Belichtungsfilter erkennbar. Das Hilfsobjektiv 3 hat die Aufgabe, die Grösse der Vorlage auf die Grösse des abstrahlenden Bildschirms einer Kathodenstrahlröhre 10 einzustellen, so dass beide Bilder die selbe Grösse in der Ebene des Farbphotomaterials 6 aufweisen.

Für die elektronische Maskenbildung und Belichtung wird der bewegliche Spiegel 4 gemäss Pfeil 9 aus dem Strahlengang entfernt. Das auf der Kathodenstrahlröhre 10 erzeugte Raster wird über das Hauptobjektiv 5 und eines der drei Farbfilter des Filterrades 7 auf das Photomaterial 6 abgebildet. Die Kathodenstrahlröhre ist hier nur schematisch eingezeichnet und kann beispielsweise ein sog. Flying-Spot-Typ sein, wie er für Télé-Ciné-Anwendungen, z.B. von der Firma Litton Ind., Tempe, Arizona, USA angeboten wird. Mit einer solchen Kathodenstrahlröhre wird eine hohe Lichtausbeute erzielt. Nach der optischen Belichtung mittels der Beleuchtungseinheit 2 wir der bewegliche Spiegel 4 gemäss Pfeil 9 aus dem Strahlengang entfernt und das Diapositiv 1 aus der durch den Pfeil A angedeuteten Stellung mittels einer geeigneten Transportvorrichtung 12 in die durch den Pfeil B angedeutete Stellung gebracht. Das Raster der Kathodenstrahlröhre 10 wird über einen teilreflektierenden Spiegel 13 und ein Objektiv 14 auf die Vorlage 1 abgebildet. Das von der Vorlage durchgelassene Licht wird mit einer Streuscheibe 16 aufgestreut und gelangt über Farbfilter 17 (blau, grün, rot) auf lichtempfindliche Elemente 15. Falls als lichtempfindliche Elemente empfindliche Photodetektoren verwendet werden, braucht der Anteil des Lichtes für diesen Messzweig nur relativ klein zu sein. In der Regel verwendet man Photomultiplier oder Photodioden. Die gleichmässige Verteilung des Lichtes auf die lichtempfindlichen Elemente 15 kann statt mittels einer Streuscheibe auch mit einem Faseroptikbündel, gekreuzten Linsenrasterelementen, dichroitischen Strahlenteilern oder prismatischen Lichtleitkörpern erzielt werden. Die Signale der Photodetektoren 15 werden auf an sich bekannte Weise in den elektronischen Einheiten 18, 19 und 20 verarbeitet und dem Steuergitter der Kathodenstrahlröhre 10 zugeführt.

Beim Vergleich des Ausführungsbeispiels gemäss der Figur mit den vorbekannten Anordnungen fällt auf, dass der geradlinige Strahlengang von der Kathodenstrahlröhre 10 über das Hauptobjektiv 5 auf das farbphotographische Material 6 und der optische Strahlengang von der Lichtquelle 2 durch das Hauptobjektiv 5 auf die farbphotograhische Platte 6 über einen Umlenkspiegel 4 verläuft, während sonst der geradlinige Strahlengang von der Lichtquelle auf die farbphotographische Platte verläuft. Es sind grundsätzlich auch schwarz/weiss Photoplatten verwendbar.

Die elektronische Einheit 18 enthält Vorverstärker für die Photodetektoren und eine Farbkorrekturschaltung. Damit werden die unerwünschten Nebenfarbdichten der Farbstoffe der Vorlage und/oder des Photomaterials 6 kompensiert. Diese Materialien weisen nach der chemischen Verarbeitung und Entwicklung die Farbstoffe Gelb, Purpur (Magenta) und Blaugrün (Cyan) auf. Soll beispielsweise ein gesättigtes Blau wiedergegeben werden, ist es störend, dass Magenta- und Cyan-Farb stoffe nicht nur grünes bzw. rotes Licht absorbieren, sondern auch Blau. Diese unerwünschten Anteile in blau werden vom eigentlichen Blausignal subtrahiert. Diese Ueberlegungen werden auch auf die anderen beiden Grundfarben angewandt und es ergibt sich daraus, wie vorbekannt, eine 3x3-Matrix mit sechs Koeffizienten, entsprechend den sechs Nebenfarbdichten der drei Wiedergabefarbstoffe. Falls nun die Vorrichtung nur für die Kontrastveränderung von Schwarz-Weiss-Bildern oder Farbbildern verwendet wird, ist selbstverständlich keine Matrixeinheit erforderlich und es genügt dann ein einziger Photodetektor.

Die elektronische Einheit 19 enthält eine Kontrast-Korrektur, also einen variablen Verstärker, der den Kontrast je nach Wunsch erniedrigt (Gegenkopplung) oder erhöht. Es können auch nicht-lineare Korrekturen der Wiedergabefunktion vorgesehen werden. Die elektronische Einheit 20 enthält den Gitterspannungsverstärker für die Kathodenstrahlröhre 10. Die Einheiten 18 und 19 können auf der Basis von Analogrechnern, wie dies in der bis jetzt bekannten Fernsehtechnik üblich ist, oder digital ausgelegt sein, wobei in diesem Falle zu Beginn ein Analogdigital-Wandler und am Ende ein Digitalanalog-Wandler vorzusehen sind. Wahlweise, jedoch nicht eingezeichnet, kann ein Zeitgeber verwendet werden, der jedesmal, wenn ein Raster auf der Kathodenstrahlröhre 10 einmal oder mehrmals vollständig geschrieben wurde, einen Impuls erhält und danach die Bewegung des Spiegels 4, des Filterrades 7 und der Vorlage 1 steuert. Die elektronischen Einheiten 18 und 19 können mit linearen, transmissionsproportionalen oder logarithmierten Signalen, proportional zu der optischen Dichte, arbeiten. Sie können auch Schaltkreise enthalten, die die Kantenschärfe erhöhen, wie sie aus der Fernsehtechnologie bekannt sind.

Aus obigem geht hervor, dass sich auf diese Weise Deckungsfehler zwischen dem optisch und elektronisch erzeugten Bild völlig vermeiden lassen. An jeder Stelle auf dem Bildschirm der Kathodenstrahlröhre, an der sich der Lichtpunkt gerade befinden mag, wird sofort die Korrektur, also die Helligkeit des Bildpunktes berechnet und nachgestellt. Der Ort und damit das Ausmass der Korrektur wird durch die Vorlage in der Stellung B bestimmt. Die Linearität bzw. die Verzerrung des Rasters auf dem Bildschirm ist somit irrelevant, das System verhält sich so, wie wenn die Vorlage optisch auf das Photomaterial abgebildet würde. Ausserdem geht aus der Beschreibung des Verfahrens und der Vorrichtung hervor, dass der enorme Lichtverlust vermieden werden kann, der sich ergibt, wenn das Licht der Kathodenstrahlröhre, das das Photomaterial belichtet, die Vorlage durchstrahlen muss, wie dies in anderen, nicht namentlich aufgeführten Vorrichtungen gemäss dem Stand der Technik geschieht. Ausserdem entfällt bei der punktweisen Abtastung mit gleichzeitiger punktweisen Belichtung die Speicherung der Bildformation als Ganzes, wie dies in weiteren vorbekannten Vorrichtungen der Fall ist.

Aus der Beschreibung ist ferner ersichtlich, dass die Expositionen sequentiell durchgeführt werden, d.h. zuerst wird die scharfe Abbildung der Vorlage mittels der Beleuchtungseinheit 2 und dem Hauptobjektiv 5 bewirkt, wobei nur ein erster Teil der für die korrekte Belichtung eines Farbbildes notwendigen Totalexposition zur Anwendung gelangt, und anschliessend wird der zweite Teil der Totalexposition durch die Kathodenstrahlröhre durchgeführt, wobei auch wieder sequentiell zuerst - mit beliebig wählbarer Reihenfolge - das Blaufilter, dann das Grünfilter und schliesslich das Rotfilter in den Strahlengang geschoben wird und gleichzeitig mit dem Filterwechsel auf das grüne bzw. rote Ausgangssignal der Matrixschaltung umgeschaltet wid, die drei additiven Teilexpositionen in ihrer Stärke bzw. Dauer jedoch so ausgewählt werden, dass die Graubalance des auf dem Farbphotomaterial belichteten Bildes erhalten bleibt.

Ferner muss das dynamische Verhalten der Korrekturschleife, bestehend aus Kathodenstrahlröhre 10, Spiegel 13, Objektiv 14, Vorlage 1 in Stellung B, Streuelement 16, Filter 17, Photodetektoren 15 und Elektronik 18-20 berücksichtigt werden. Dies bedingt, dass die Kathodenstrahlröhre eine Phosphorschicht mit rascher Abklingzeit aufweist. Phosphore mit einer Abklingzeit, d.h. Abfall der Lichtintensität auf 10 % nach Elektronenbeschuss, von 0,1 μsec sind erhältlich, sie werden in sogenannten "flying spot" Röhren für die Filmabtastung beim Fernsehen verwendet. Auch bei den Photodetektoren 15 ergeben sich bezüglich Schnelligkeit keine Probleme. Man kann beispielsweise als grobe Ueberschlagsrechnung davon ausgehen, dass für einen Bildpunkt eine μsec zur Verfügung steht, d.h. dass ein Raster von 1'000 Linien mit je 1'000 Bildpunkten, also $10^6$ Bildpunkten, in einer Sekunde geschrieben wird. Die Rechenoperationen in den Einheiten 18 und 19 müssen bei diesem Beispiel in weniger als einer μsec erfolgen. Dies ist mit auf dem Markt erhältlichen Elementen möglich, denn bei vergleichbaren Anordnungen beim Fernsehen werden pro Sekunde 25 x ca. 400'000 Bildpunkte, also etwa $10 \cdot 10^6$ Bildpunkte registriert. Somit arbeiten solche auf dem Markt sich befindlichen Geräte etwa zehnmal schneller als hier notwendig.

Wie bereits eingangs erwähnt wurde, ist die Randabfall-Korrektur wichtig, um ein korrektes und gutes Bild zu erhalten. Diese ist beispielsweise elektronisch über einen Verstärker möglich, der den Strahlstrom der Kathodenstrahlröhre in Abhängigkeit vom Abstand des Lichtflecks vom Mittelpunkt des Bildschirmes der Kathodenstrahlröhre regelt. Die dazu nötigen Signale werden aus den Ablenkspannungen gewonnen.

Die Randkorrektur ist auch optisch möglich, wobei man eine transparente Folie oder Scheibe, die grau eingefärbt ist und in der Bildmitte stärker absorbiert als am Bildrand, über den Bildschirm der Kathodenstrahlröhre legt.

Eine weitere Methode zur Kompensation des Randabfalls besteht in der Anwendung nicht-linearer Raster, z.B. Lissajous-Figuren. Um diese zu erhalten, werden aus Ablenkspannungen zwei Wechselspannungen für die x-und y-Ablenkung des Strahlstromes verwendet, deren Frequenzen vorzugsweise zwei aufeinanderfolgenden Primzahlen entsprechen. Die Liniendichte wird am Bildrand höher. Um eine Ueberkorrektur zu vermeiden, wird der Rand des Rasters nicht verwendet, d.h. er wird entweder elektronisch unterdrückt oder über den Rand des auf der Kathodenstrahlröhre ausnützbaren Bildfeldes hinausgeschrieben. Berechnungen haben ergeben, dass der $\cos^4 \alpha$-Abfall auf diese Weise kompensiert werden kann, wenn man etwa 75 % der Rasterbildbreite und -höhe ausnutzt, wobei der Winkel $2\alpha$ der Oeffnung des Lichtkegels zwischen dem Lichtpunkt am Schirm und der Oeffnung des Objektivs 5 entspricht.

Eine weitere Methode zur Kompensation des Randabfalls besteht darin, dass man ein lineares, rechteckiges Raster aufzeichnet, jedoch die Schreibgeschwindigkeit des Elektronenstrahles in Abhängigkeit des Abstandes des Lichtpunktes auf dem Bildschirm der Kathodenstrahlröhre von der Bildmitte so verändert, dass sich auf der Ebene des Photomaterials ohne Bildmodulation eine konstante Helligkeit ergibt. Der Strahl bewegt sich somit am Bildrand langsamer als in der Bildmitte.

Verwendet man ein Raster mit tausend Linien pro Bildhöhe, so sind, kombiniert mit der optischen Teilbelichtung, die Rasterlinien auf dem fertigen Bild nur schwer erkenntlich, besonders dann, wenn ein Lissajous-Raster angewendet wird. Es sind jeoch Verfahren bekannt, mit denen auch für lineare Rechteckraster die Linienstruktur unterdrückt werden kann. So kann man das Raster auch zwei- oder mehrmals schreiben, wobei man elektronisch dafür sorgt, dass die Rasterlinien des zweiten Rasters zwischen diejenigen des ersten Rasters geschrieben werden.

**Patentansprüche**

1. Verfahren zur Herstellung von photograhischen Bildern von transparenten Vorlagen, worin die Vorlage (1) in einem ersten Strahlengang mittels einer Lichtquelle (2) und einer Optik (3, 4, 5) und in einem zweien Strahlengang zwecks Farb- und Kontrastkorrektur mittels einer von einer Bildmesseinrichtung (15) und Recheneinheit (18, 19, 20) gesteuerten Kathodenstrahlröhre (10) als Maske deckungsgleich auf photgraphisches Material (6) abgebildet wird, dadurch gekennzeichnet, dass die Maske durch eine aus der Kathodenstrahlröhre (10), Vorlage (1), Bildmesseinrichtung (15), Recheneinheit (18, 19, 20) und wieder Kathodenstrahlröhre (10) gebildeten Rückkopplungsschleife erzeugt wird, durch die insbesondere die geometrischen Bildverzerrungen der Kathodenstrahlröhre kompensiert werden, wobei an jeder Stelle auf dem Bildschirm der Kathodenstrahlröhre, an der sich der Lichtpunkt gerade befindet, die Helligkeit des Bildpunktes berechnet und sofort korrigiert wird.

2. Verfahren nach Anspruch 1, dadurch gekennzeichnet, dass der erste, lichtoptische Strahlengang von der Lichtquelle (2) zum photographischen Material (6) über ein Hilfsobjektiv (3) und einen aus dem Strahlengang herausnehmbaren Umlenkspiegel (4) und der zweite, von der Kathodenstrahlröhre (10) herstammende Strahlengang zum photographischen Material (6) geradlinig angeordnet wird und beide Strahlengänge durch ein Hauptobjektiv (5) auf das photographische Material (6) abgebildet werden, während der Strahlengang der Rückkopplungsschleife über einen teilreflektierenden Spiegel (13) aus dem zweiten Strahlengang zur Bildmesseinrichtung (15) ausgeschieden wird.

3. Verfahren nach Anspruch 1 oder 2, dadurch gekennzeichnet, dass das Rasterbild der Kathodenstrahlröhre (10) über den teilreflektierenden Spiegel (13) und über ein Objektiv (14) auf die Vorlage (1) gesandt, aufgeteilt wird, dann über drei Farbfilter (17) der Farben blau, grün und rot auf die Bildmesseinrichtung (15) gelangt, in den anschliessenden elektronischen Einheiten (18, 19, 20) verarbeitet und der Kathodenstrahlröhre (10) zugeführt wird.

4. Verfahren nach einem der Ansprüche 1 bis 3, dadurch gekennzeichnet, dass die Belichtung sequentiell durchgeführt werden, wobei zuerst die lichtoptische Abbildung der Vorlage in einer ersten Stellungen (A) durchgeführt wird und der zweite Teil der Totalexposition, die Abbildung der Maske der Kathodenstrahlröhre, nach Herausnahme des Umlenkspiegels (4) aus dem zweiten Strahlengang durchgeführt wird, wobei der zweite Teil der Totalexposition ebenfalls in bezug auf die drei Grundfarben erfolgt und die Farbteilexpositionen in ihrer Stärke und Dauer so ausgewählt werden, dass die Graubalance des auf dem Photomaterial (6) belichteten Bildes erhalten bleibt.

5. Verfahren nach einem der Ansprüche 1 bis 4, dadurch gekennzeichnet, dass für das Bild der Kathodenstrahlröhre (10) eine Randabfallkorrektur durchgeführt wird.

6. Verfahren nach Anspruch 5, dadurch gekennzeichnet, dass für die Randabfallkorrektur eine graue, nicht-lichtstreuende Scheibe, die in der Mitte stärker eingefärbt ist als am Rande, auf den Bildschirm der Kathodenstrahlröhre gelegt wird.

7. Verfahren nach Anspruch 5, dadurch gekennzeichnet, dass für die Randabfallkorrektur die Helligkeit oder die Geschwindigkeit des Lichtflecks der Kathodenstrahlröhre in Abhängigkeit von seinem Abstand zur Bildmitte gesteuert wird.

8. Verfahren nach Anspruch 5, dadurch gekennzeichnet, dass für die Randabfallkorrektur nicht-lineare Raster, insbesondere Lissajous-Figuren, verwendet werden.

9. Vorrichtung zur Ausführung des Verfahrens nach einem der Ansprüche 1 bis 8, dadurch gekennzeichnet, dass der erste, licht-optische Strahlengang eine aus einer Lampe und Kopierfilter bestehende Belichtungseinheit (2), eine Hilfsoptik (3) und einen aus dem Strahlengang entfernbaren, vorzugsweise verschiebbaren Umlenkspiegel (4) aufweist, und der zweite, von der Kathodenstrahlröhre stammende Strahlengang einen teilreflektierenden Spiegel (13) und einen Satz Farbfilter (7) aufweist und beide Strahlengänge so angeordnet sind, dass sie durch das gleiche Hauptobjektiv (5) auf das photographische Material (6) gerichtet werden, während die Rückkopplungsschleife neben der Kathodenstrahlröhre (10) und dem teilreflektierenden Spiegel (13) eine Optik (14), einen Lichtteiler (16), Farbfilter (17) mit anschliessenden, den Farbfiltern zugeordneten Photodetektoren (15), sowie eine Signalverarbeitungselektronik (18, 19, 20) enthält.

10. Vorrichtung zur Ausführung des Verfahrens nach einem der Ansprüche 1-8, dadurch gekennzeichnet, dass sie eine die Kathodenstrahlröhre (10), einen teildurchlässigen Spiegel (13), eine Bildmesseinrichtung (15) und eine Recheneinheit (18, 19, 20) zur elektronischen Bildverarbeitung und Ansteuerung der Kathodenstrahlröhre umfassende Rückkopplungsschleife aufweist.

11. Vorrichtung nach Anspruch 10, dadurch gekennzeichnet, dass sie eine Recheneinrichtung (18, 19, 20) zur Randabfallkorektur aufweist.

12. Vorrichtung im wesentlichen wie beschrieben und dargestellt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | RESEARCH DISCLOSURE, Nr. 174, Oktober 1978, Seiten 12,13, Ref Nr. 17453, Havart, GB; "Photographic enlarging apparatus" * Insgesamt * --- | 1 | G 03 B 27/72 |
| D,A | US-A-3 459 888 (D.A. SOKOLOV) * Spalten 3-15; Figur 1 * --- | 1 | |
| D,A | DE-A-2 408 019 (AGFA-GEVAERT AG) * Seiten 5-9; Figuren 1-4 * ----- | 1 | |

**RECHERCHIERTE SACHGEBIETE (Int. Cl.4)**

G 03 B 27/72
G 03 B 27/73
G 03 B 27/80

Der vorliegende Recherchenbericht wurde für alle Patentansprüche erstellt

| Recherchenort | Abschlußdatum der Recherche | Prüfer |
|---|---|---|
| DEN HAAG | 03-11-1988 | BOEYKENS J.W. |